Europäisches Patentamt

European Patent Office

Office européen des brevets

(19)

(11) Publication number: **0 312 254**
A2

# (12) EUROPEAN PATENT APPLICATION

(21) Application number: **88309344.5**

(22) Date of filing: **07.10.88**

(51) Int. Cl.⁴: **B29C 51/08 , B29C 51/42**

(30) Priority: **10.10.87 GB 8723860**

(43) Date of publication of application:
**19.04.89 Bulletin 89/16**

(84) Designated Contracting States:
**CH DE FR GB LI**

(71) Applicant: **H THOMAS JEWELLERS OF PARK
LANE LTD
17 Park Lane Poynton
Stockport Cheshire SK12 1 RD(GB)**

(72) Inventor: **Presfield, Thomas David
62 Manchester Road Titherington
Macclesfield Cheshire(GB).**

(74) Representative: **Kelvie, George Thomas
G.T. Kelvie & Co. The Victoria Suite 3rd Floor
Northern Assurance Buildings Albert Square
Manchester M2 4DN(GB)**

(54) **Forming thermo-plastics materials.**

(57) Apparatus for forming components from thermo-plastics materials, e.g. watch glasses, comprises a tool (12) having a template (12A) and a support plug (12C). Pressure can be applied to the template by means of a heat conducting rod (20) and a heat conducting plate (12B), whilst the plug (12C) is supported upon a conducted and cooling plate (16). Heat is applied from a hot air gun (24) or by means of an electrically heated plate (12D) to a sheet of thermoplastics material (14) through the plate (12B) and template (12A). The method and apparatus ensure that the formed component retains a degree of optical flatness.

FIG.1.

EP 0 312 254 A2

This invention relates to a method and apparatus for forming thermoplastic material. In particular the invention is concerned with forming watch glasses from rolled acrylic sheet.

A variety of established methods and associated apparatus are available for the forming of thermoplastic materials. These methods usually involve the heating of the material to render it plastic so that it can adopt the form required. The plasticising of the material by the application of heat causes variations in the thickness of the material and will also cause variations in the flatness of the material surface.

In the case of certain components which can be made from thermoplastics materials such as watch glasses it is important that a degree of optical flatness is maintained.

The present invention seeks to provide a method and an apparatus for performing the method, whereby components can be formed from thermoplastics materials whilst still retaining a degree of optical flatness in the formed component.

Accordingly the present invention provides a method of forming a thermoplastic material, the method comprising the steps of placing a sheet of thermoplastic material to be formed between the first and second parts of a forming tool, applying heat indirectly to the thermoplastic material so that only the material to be formed between between the tool parts is plasticised by the heat, applying pressure to the material to form a component between the tool parts and removing the formed component when suitably cooled and hardened.

The pressure can be applied to one or both parts of the forming tool. In one arrangement the tool is positioned on a base and pressure is applied to one part only of the tool by a compressed coil spring.

The method further comprises providing a heat conducting path for the applied heat to the portion of the first tool part in contact with the thermoplastic material and providing a heat conducting and cooling support for the second tool part.

Apparatus for performing the method can comprise a tool including a first part having a perimeter defining a shape to be formed and a second part shaped to fit within the perimeter of the first tool part, and means for applying heat indirectly to a predetermined area of the thermoplastics material.

The second tool part does not have to be an accurate fit in the first tool part as its function is mainly to determine the component height and to conduct heat away from the component.

The first and second tool parts each include or comprise a heat conducting element and the second tool part is positioned on a heat conducting support having cooling means.

The first and second tool parts and the tool part support can all be formed from aluminium and the second tool part can be made from a plastics material if required.

The tool support can be provided with cooling fins.

Means for applying pressure can be provided for both tool parts and one of said pressure applying means can include a heat conducting rod.

Pressure can be applied by use of a compressed coil spring alone or in combination with mechanical, hydraulic or pneumatic presses to enable the shaping process to take place automatically when the correct temperature is reached and the heated section of the thermoplastic material becomes pliable.

The present invention will now be more particularly described with reference to the accompanying drawings in which

Fig.1 shows a diagrammatic sectional elevation of one form of apparatus according to the present invention,

Fig. 2 is a section on line ii-ii in Fig. 1,

Fig. 3 is a section through a component formed in the apparatus shown in Figs. 1 and 2, and

Fig. 4 shows a diagramatic sectional elevation on a further form of apparatus according to the present invention.

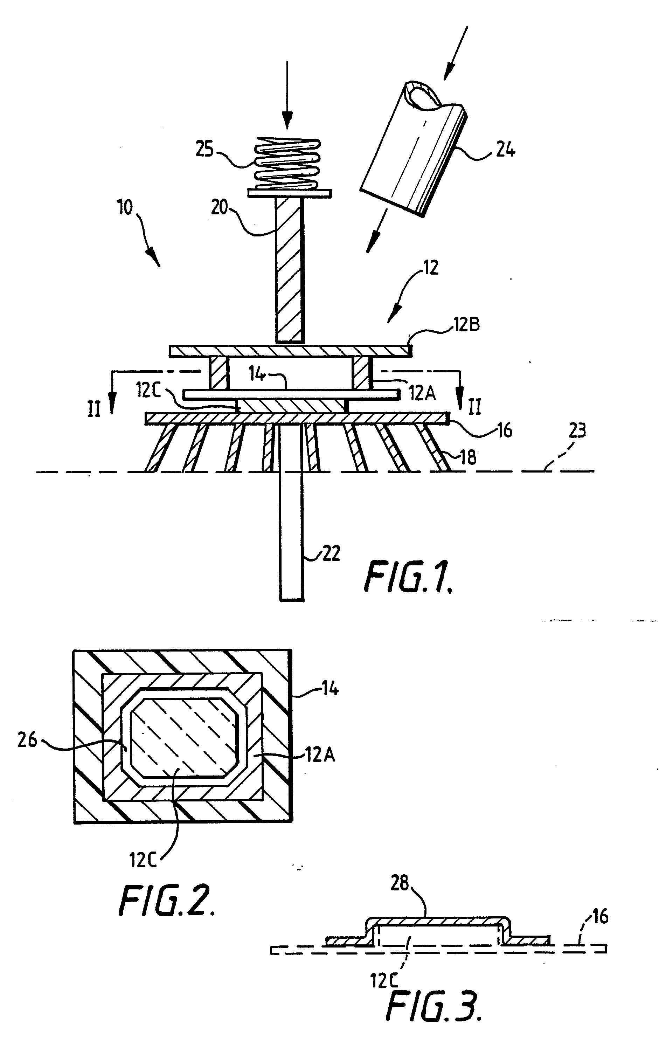

Referring to Figs. 1 to 3, there is shown an apparatus 10 for forming thermoplastics material to a required shape. The apparatus is particularly designed for forming watch glasses.

The apparatus 10 includes a forming tool 12 comprising an aluminium template 12A, a heat conducting plate 12B resting on or secured to the template 12A, and an aluminium support 12C.

A piece of thermoplastics material 14, in this case cut from a sheet of rolled acrylic material is placed between the support 12C and template 12A. The support 12C is positioned on a heat conducting and cooling plate 16 provided with cooling fins 18.

Pressure can be applied to the plate 12B and thus the template 12A through a heat conducting rod 20 and to the insulating plate 16 through a rod 22. The pressure can be applied to either or both of the rods 20, 22 by any convenient means such as mechanical, hydraulic or pneumatic presses.

Alternatively the rod 22 can be dispensed with and the tool 12 can be rest on a firm, flat surface 23. Pressure is applied to the tool through the rod 20 by compressed coil spring 25. Pressure can be applied to the coil spring 25 by, for example, a mechanical press.

A hot air gun 24 is used to apply heat to the sheet 14 indirectly via the plate 12B and the template 12A. The material 14 is not heated directly.

Referring to Fig. 2 it will be seen that the template 12A defines a lozenge shaped space and the support plug 12C is similarly shaped with a clearance 26 between the plug and the template to accommodate the thermoplastic material when the material is formed.

The apparatus 10 is used to form a component from thermoplastics material by placing a piece of the thermoplastics materials of suitable size between the template 12A and the plug 12C, the plug and template being in register with one another so that they define a constant clearance 26. The support plug has already been positioned upon the conducting and cooling plate 16 and the heat conducting plate 12B is placed on the template 12A.

Initially heat is applied in the form of hot air to the heat conducting plate 12B and the heat is conducted through the plate 12B and the template 12A to plasticise the piece of thermoplastics material 14 only in the area where the material is in contact with the template 12A. Pressure already applied to the material 14 through the rods 20, 22 or the rod 20 alone using the spring 25 causes the thermoplastic material to adopt the shape defined between the template and support plug and form a component 28 as shown in Fig. 3.

The upper surface of the thermoplastic material 14 is not in contact with any part of the tool 12 and is insulated from the heat because of the space between the template and the heat conducting plate 12B.

Similarly the lower surface of the piece of thermoplastics material is kept cool from the heat applied by the hot air gun 24 by means of the heat conducting support 12C and the cooled plate 16.

Therefore since the heat is only applied to that part of the thermoplastics material where it is required to he deformed, the remainder of the piece of thermoplastics material is not distorted and retains an acceptable degree of optical flatness.

As soon as the component is formed to shape the hot air gun or other heat source is switched off. The pressure is maintained until natural cooling by the aluminium finned baseplate causes the component to harden. This will be almost instantaneous because as soon as the outer edges 15 of the sheet 14 contact the cooling plate 16, heat is dispersed from the thermoplastics material so causing immediate hardening.

The perimeter of the component can be of any desired shape and the surface of the support plug in contact with the thermoplastics material need not be of exact proportions as it does not play any part in forming the shape. Its main function is to determine the height of the component and also to disburse heat from its flat top surface by conducting heat away. It is important that contact is maintained with the thermoplastics material and the plug for this purpose.

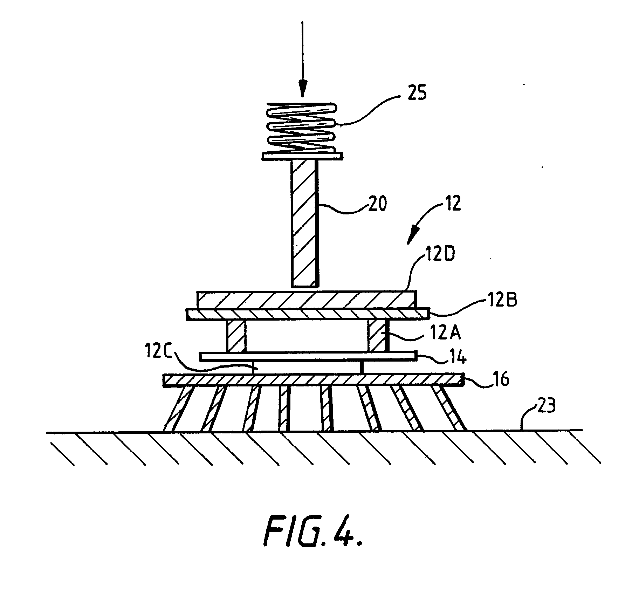

Referring to Fig. 4 in which similar components have been given identical references to those in Figs. 1 to 3, the rod 22 and hot air gun 24 have been dispensed with and the tool 12 is shown resting on a firm surface such as a work bench 23. An electrically heated plate 12D is shown resting on the upper surface of the heat conducting plate 12B in order to apply heat indirectly to the thermoplastics material 14.

Pressure is applied to the tool 12 by means of a compressed coil spring 25 and the rod 20. The coil spring can be compressed for example by means of a mechanical press.

The apparatus illustrated in Fig. 4 functions in the same way as described above with reference to Figs. 1 to 3.

The invention has been described in relation to the manufacture of watch glasses, but it can be applied to the manufacture of any component, whether or not a degree of optical flatness is required, providing that the component is to be formed from a thermoplastics material.

## Claims

1. A method of forming thermoplastics material, the method comprising the steps of placing a sheet of thermoplastics material to be formed between the first and second parts of a forming tool, applying heat indirectly to the thermoplastics material so that only that region of the thermoplastics material to be formed between the tool parts is plasticised by the heat, applying pressure to the material to form a component between the tool parts and removing the formed component when suitably cooled and hardened.

2. A method as claimed in claim 1 in which the pressure is applied to only one of said tool parts.

3. A method as claimed in claim 1 in which pressure is applied to both of said tool parts.

4. A method as claimed in any one of the preceding claims in which one of said tool parts has a perimeter in contact with the thermoplastics material and a heat conducting element, heat being applied to the heat conductint element to conduct heat to the tool part perimeter to soften the thermoplastics material in contact with the tool part perimeter, and the other one of said tool parts includes a heat conducting element in contact with a cooled support.

5. Forming apparatus for performing the method as claimed in any one of the preceding claims comprising a tool including a first part having a perimeter defining a shape to be formed and a second part shaped to fit within the perimeter of the first tool part, means for applying pressure to at least one of said tool parts and means for applying heat indirectly to a predetermined area of the thermoplastics material, and means for cooling the component once formed.

6. Apparatus as claimed in claim 5 in which the first and second tool parts each include a heat conducting element.

7. Apparatus as claimed in claim 5 or claim 6 in which the second tool part is positioned upon a support having cooling means.

8. Apparatus as claimed in claim 7 in which the first and second tool parts and the support are formed from aluminium.

9. Apparatus as claimed in any one of the preceding claims 5 to 8 in which pressure applying means are provided for each or both of said tool parts.

10. Apparatus as claimed in claim 9 in which the pressurising means includes a rod and a compressed coil spring.

25

10

20

12

12B

14

12C

II

12A

II

16

18

23

22

*FIG.1.*

14

26

12A

12C

*FIG.2.*

28

16

12C

*FIG.3.*

25

20

12

12D

12B

12A

12C

14

16

23

FIG.4.